# EUROPÄISCHE PATENTSCHRIFT

(11) **EP 0 764 775 B1**
(45) Veröffentlichungstag und Bekanntmachung des Hinweises auf die Patenterteilung: **15.03.2000**
(21) Anmeldenummer: 96112657.0
(22) Anmeldetag: 06.08.1996
(51) Int. Cl.: F02B 37/16, F02B 37/18

(54) **Brennkraftmaschine mit einem Lader**
Internal combustion engine having a turbocharger
Moteur à combustion interne comprenant un turbocompresseur

(30) Priorität: 21.09.1995 DE 19535058
(43) Veröffentlichungstag der Anmeldung: 26.03.1997
(73) Patentinhaber: Micro Compact Car smart GmbH, 71272 Renningen (DE)
(72) Erfinder: Kempka, Karl-Heinz, 73730 Esslingen (DE); Strätz, Peter, 71063 Sindelfingen (DE)
(74) Vertreter: Weiss, Klaus

(56) Entgegenhaltungen:
- WO-A-81/01171
- DE-A- 4 243 448
- GB-A- 2 077 354
- US-A- 4 392 352
- US-A- 5 214 919
- US-A- 5 271 228

## Beschreibung

Die Erfindung betrifft eine Brennkraftmaschine mit einem Lader gemäß dem Oberbegriff des Anspruchs 1.

Aus der DE 42 43 448 A1 ist eine Steuervorrichtung bekannt, bei der bei einer aufgeladenen Brennkraftmaschine mittels eines Taktventils der Arbeitsdruck eines pneumatischen Stellantriebes beeinflußbar ist. Das Taktventil ist als 3/2-Wege-Ventil ausgebildet, welches mit dem Stellantrieb, einer Luftpumpe und über eine Zweigleitung mit der Ansaugleitung der Brennkraftmaschine verbunden ist. In einer ersten Schaltstellung des Taktventils kann über eine Verbindung der Luftpumpe mit dem Stellantrieb der Innendruck erhöht werden, während in einer zweiten Schaltstellung des Taktventils ein Druckabbau von dem Stellantrieb in die Ansaugleitung erfolgt. In einer alternativen Ausbildungsform mit einem 3/3-Wege-Ventil als Taktventil wird in einer dritten Schaltstellung der Stellantrieb druckdicht abgeschlossen.

Beispielsweise zur Realisierung eines Schubbetriebes ist ein zusätzliches (Schub-)Umluftventil notwendig, welches insbesondere die Druckseite des Laders mit der Saugseite des Laders kurzschließt. Das Schubumluftventil erfordert eine separate Steuerung und/oder Steuerleitung. Eine derartige Anordnung zur Steuerung der aufgeladenen Brennkraftmaschine in unterschiedlichen Betriebsphasen weist den Nachteil auf, daß eine hohe Anzahl von Komponenten erforderlich ist, die darüber hinaus eine bauaufwendige Ausgestaltung zur Verbindung der Komponenten erfordert.

Der Erfindung liegt deshalb die Aufgabe zugrunde, eine Vorrichtung zur Ansteuerung der aufgeladenen Brennkraftmaschine in den jeweils verschiedenen Betriebsphasen zu schaffen, die eine einfache und kostengünstige Anordnung ermöglicht.

Diese Aufgabe wird erfindungsgemäß durch die kennzeichnenden Merkmale des Hauptanspruchs gelöst.

Durch die Ausbildung eines Steuerventils, das sowohl die Funktion des Taktventils als auch des Schubumluftventils aufweist, wird ermöglicht, daß ein wesentlich geringerer Bauraum benötigt wird, da für die Erfüllung der obengenannten Funktionen nur ein Steuerventil erforderlich ist. Darüber hinaus ist eine wesentlich geringere Anzahl von Bauteilen erforderlich, wodurch eine Kosteneinsparung gegeben ist. Beispielsweise kann durch die Einsparung des Schubumluftventils auch eine das Schubumluftventil steuernde Steuerleitung entfallen, wodurch eine einfache Ausgestaltung der aufgeladenen Brennkraftmaschine gegeben ist. Zudem ist dadurch eine Vereinfachung bei der Überprüfung und Instandhaltung einer aufgeladenen Brennkraftmaschine gegeben. Die Reparaturanfälligkeit aufgrund der Verwendung von nur einem Steuerventil kann ebenso verringert werden.

In den Unteransprüchen sind weitere vorteilhafte Ausführungsformen und Weiterbildungen der Erfindung sowie in der nachfolgenden Beschreibung angegeben.

In der Zeichnung ist die Erfindung anhand eines bevorzugten Ausführungsbeispiels aufgezeigt. Es zeigen:
- Fig. 1: eine schematische Darstellung einer Motorsteuerung einer aufgeladenen Brennkraftmaschine gemäß dem Stand der Technik,
- Fig. 2: eine schematische Darstellung einer erfindungsgemäßen Motorsteuerung einer aufgeladenen Brennkraftmaschine und

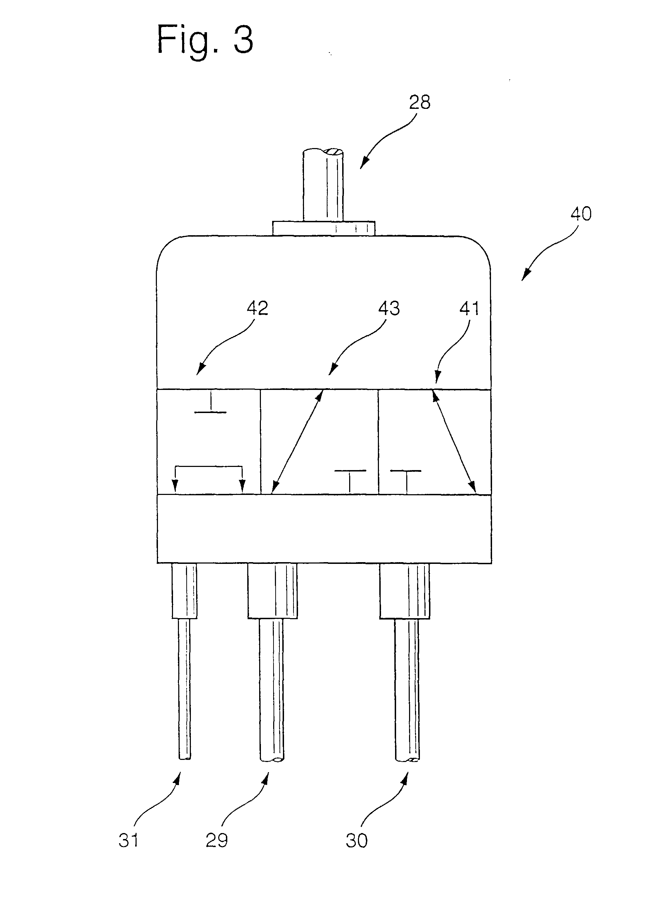

- Fig. 3: eine schematisch vergrößerte Darstellung des erfindungsgemäßen Steuerventils mit Schaltstellungen.

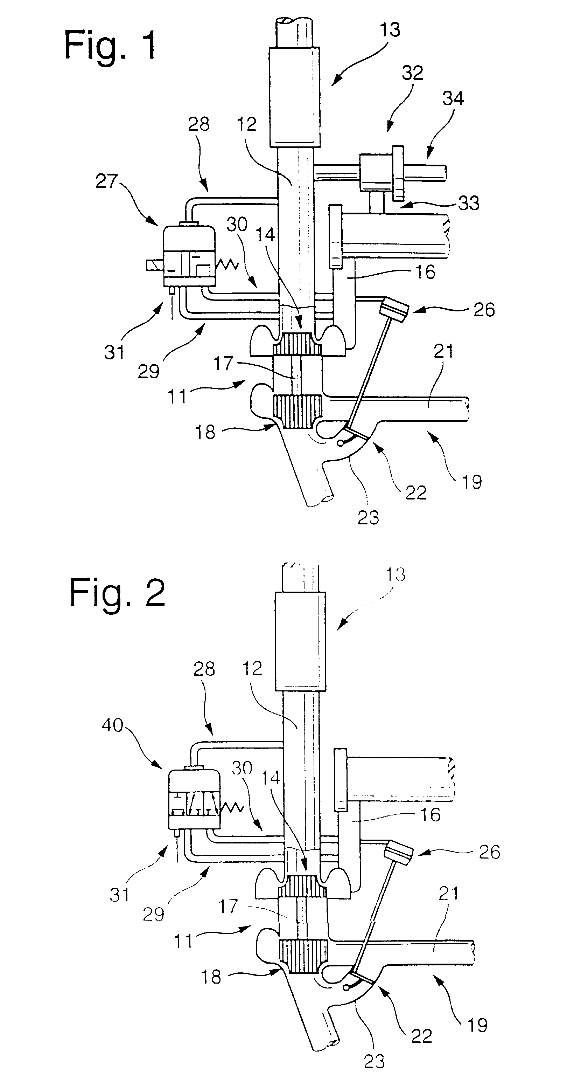

In Fig. 1 ist eine schematische Teilansicht einer Motorsteuerung einer aufgeladenen Brennkraftmaschine dargestellt, wie sie aus dem Stand der Technik bekannt ist. Die nicht dargestellte Brennkraftmaschine weist einen Lader 11 auf, auf dessen Saugseite an einem Saugrohr 12 ein Luftmassenmesser 13 vorgesehen ist. Stromab eines Verdichterrades 14 des Laders 11 ist stromab eine Saugleitung 16 vorgesehen, die zur Brennkraftmaschine führt. Das Verdichterrad 14 ist über eine Antriebswelle 17 mit einer Turbine 18 verbunden, die in der Abgasanlage 19 der Brennkraftmaschine vorgesehen ist. Stromauf der Turbine ist in einer Abgasleitung 21 ein Abgasdruckventil 22 (waste-gate) angeordnet, über das eine Bypassleitung 23 zu der Turbine 18 steuerbar ist. Das Abgasdruckventil 22 ist über einen Stellantrieb 26 steuerbar, das mit einem Taktventil 27 in Verbindung steht.

Das Taktventil 27 weist eine erste Steuerleitung 28 auf, die stromauf des Laders 11 von einem Saugrohr 12 abzweigt. Desweiteren weist das Taktventil 27 der ersten Steuerleitung 28 gegenüberliegend eine zweite und dritte Steuerleitung 29, 30 auf. Die zweite Steuerleitung 29 führt zu der Druckseite des Laders 11 in die Saugleitung 16. Die dritte Steuerleitung 30 führt zu dem Stellantrieb 26. Das Taktventil 27 weist einen elektrischen Anschluß 31 auf, über den das Taktventil 27 Signale von dem Motormanagement erhält und steuerbar ist.

Das Taktventil 27 ist als 3/2-Wegeventil ausgebildet und weist eine erste Schaltstellung auf, bei der die erste Steuerleitung 28 mit der zweiten Steuerleitung 30 in Verbindung steht, so daß der Saugrohrdruck an dem Steuerventils 26 anliegt. Eine zweite Schaltstellung 42 ist dadurch gegeben, daß die Druckseite des Laders 11 mit dem Steuerventil 26 in Verbindung steht.

Die Saugleitung 16 weist druckseitig einen Abzweig 33 auf, in dem ein Schubumluftventil 32 angeordnet ist. Dieses Schubumluftventil 32 ist über eine Steuerleitung 34 steuerbar. Durch Ansteuerung des Schubumluftventils 32 ist ein Kurzschlußkreislauf zwischen der Saugseite und der Druckseite des Laders 11 gegeben.

In Fig. 2 ist eine erfindungsgemäße schematische Teilansicht einer Motorsteuerung einer aufgeladenen Brennkraftmaschine dargestellt. Im Unterschied zu Fig. 1 ist ein 3/3-Wege-Ventil als Steuerventil 40 vorgesehen, das eine erste und zweite Schaltstellung 41 und 42 analog dem zu Fig. 1 beschriebenen Taktventil 27 aufweist. Desweiteren ist eine dritte Schaltstellung 43 vorgesehen, bei der die erste Steuerleitung 28, die saugseitig am Saugrohr 12 angeordnet ist, mit der zweiten Steuerleitung 29, die druckseitig des Laders 11 angeordnet ist, in Verbindung. Dadurch kann ein Kurzschlußkreislauf zwischen der Druckseite und der Saugseite des Laders 11 geschaffen sein. Die Anordnung eines Schubumluftventils 32 und dessen Steuerleitung 34 gemäß Fig.1 kann somit entfallen. Dies führt zu einer Verringerung der Komponenten und einer einfacheren Ausgestaltung einer Motorsteuerung. Die Ansteuerung des Steuerventils 40 erfolgt weiterhin über das Motormanagement durch elektrische Signale gesteuert werden kann.

## Patentansprüche

1. Brennkraftmaschine mit einem Lader (11), mit zumindest einem Taktventil zur Steuerung eines Stellantriebes (26) eines Abgasdruckventils (22) (waste-gate), dadurch gekennzeichnet, daß ein Steuerventil (40) vorgesehen ist, welches das Taktventil und ein Schubumluftventil zur Steuerung der Ladeluft in einem Kurzschlußkreis des Laders (11) umfaßt.

2. Brennkraftmaschine nach Anspruch 1, dadurch gekennzeichnet, daß das Steuerventil (40) eine erste Steuerleitung (28), die auf einer Saugseite des Laders (11) zu dem Saugrohr (12) führt, eine zweite Steuerleitung (29), die auf einer Druckseite des Laders (11) zu einer Saugleitung (16) führt, und eine dritte Steuerleitung (30), die zu dem Stellantrieb (26) führt, aufweist.

3. Brennkraftmaschine nach Anspruch 1 oder 2, dadurch gekennzeichnet, daß das Steuerventil (40) eine erste Schaltstellung (41) aufweist, bei der der Stellantrieb (26) des Abgasdruckventils (22) mit einer Saugseite des Laders (11) verbindbar ist.

4. Brennkraftmaschine nach einem der vorhergehenden Ansprüche, dadurch gekennzeichnet, daß das Steuerventil (40) eine zweite Schaltstellung (42) aufweist, bei der der Stellantriebes (26) des Abgasrückführventils (22) (Waste-Gate) mit der Druckseite des Laders (11) verbindbar ist.

5. Brennkraftmaschine nach einem der vorhergehenden Ansprüche, dadurch gekennzeichnet, daß das Steuerventil (40) eine dritte Schaltstellung (43) zur Steuerung der Ladeluft im Kurzschlußkreislauf des Laders (11) aufweist.

6. Brennkraftmaschine nach einem der vorhergehenden Ansprüche, dadurch gekennzeichnet, daß das Steuerventil (40) als 3/3-Wegeventil ausgebildet ist.

## Claims

1. An internal combustion engine with a supercharger (11) with at least one timing valve to control an actuator (26) in an exhaust back pressure transducer valve (22) (waste-gate) characterised in that a control valve (40) is provided which contains the timing valve and a divert air valve to control the charge air in a short circuit in the supercharger (11).

2. An internal combustion engine in accordance with Claim 1 characterised in that the control valve (40) has a first control line (28) which leads to the intake pipe (12) on the intake side of the supercharger (11), a second control line (29) which leads to an intake line (16) n the pressure side of the supercharger (12) and a third control line (30) which leads to the actuator (26).

3. An internal combustion engine in accordance with Claims 1 or 2, characterised in that the control valve (40) has a first valve position (41) in which the actuator (26) in the exhaust back pressure transducer valve (22) can be connected to the intake side of the supercharger (11).

4. An internal combustion engine in accordance with one of the preceding claims, characterised in that the control valve (40) has a second valve position (42) in which the actuator (26) in the exhaust back pressure transducer valve (22) (waste-gate) can be connected to the pressure side of the supercharger (11).

5. An internal combustion engine in accordance with one of the preceding claims, characterised in that the control valve (40) has a third valve position (42) to control the charge air in the short circuit of the supercharger (11).

6. An internal combustion engine in accordance with one of the preceding claims, characterised in that the control valve (40) is designed as a 3/3-way valve.

## Revendications

1. Moteur à combustion interne comportant un suralimenteur (11), possédant au moins une soupape de cadencement pour la commande d'un dispositif d'entraînement de réglage (26) d'une soupape (22) de commande de la pression des gaz d'échappement (waste-gate), caractérisé en ce qu'il est prévu une soupape de commande (4), qui inclut la soupape de cadencement et une soupape de commande circulation d'air en poussée, pour la commande de l'air de suralimentation dans un circuit de dérivation du suralimenteur (11).

2. Moteur à combustion interne selon la revendication 1, caractérisé en ce que la soupape de commande (40) possède une première canalisation de commande (28) qui aboutit, sur un côté d'aspiration du suralimenteur (11), au tube d'aspiration (12), une seconde canalisation de commande (29) qui conduit, sur un côté de refoulement du suralimenteur (11), à un conduit d'aspiration (16) et une troisième canalisation de commande (13), qui aboutit au dispositif d'entraînement de réglage (26).

3. Moteur à combustion interne selon la revendication 1 ou 2, caractérisé en ce que la soupape de commande (40) comporte une première position de commutation (41), dans laquelle le dispositif d'entraînement de réglage (26) de la soupape (22) de commande de refoulement de la pression des gaz d'échappement peut être raccordé à un côté aspiration du suralimenteur (11).

4. Moteur à combustion interne selon l'une des revendications précédentes, caractérisé en ce que la soupape de commande (40) comporte une deuxième position de commutation (42), dans laquelle le dispositif de commande de réglage (26) de la soupape (22) de renvoi des gaz d'échappement (waste-gate) peut être raccordé au côté refoulement du suralimenteur (11).

5. Moteur à combustion interne selon l'une des revendications précédentes, caractérisé en ce que la soupape de commande (40) possède une troisième position de commutation (43) pour la commande de l'air de suralimentation dans le circuit de dérivation du suralimenteur (11).

6. Moteur à combustion interne selon l'une des revendications précédentes, caractérisé en ce que la soupape de commande (40) est agencée sous la forme d'une soupape à 3/3 voies.
